(19) Europäisches Patentamt
European Patent Office
Office européen des brevets

(11) **EP 4 027 133 A1**

(12) **EUROPEAN PATENT APPLICATION**

(43) Date of publication:
**13.07.2022 Bulletin 2022/28**

(21) Application number: **21151093.8**

(22) Date of filing: **12.01.2021**

(51) International Patent Classification (IPC):
**G01N 21/63** (2006.01)　　**G01N 21/64** (2006.01)

(52) Cooperative Patent Classification (CPC):
**G01N 21/636; G01N 21/6408; G01N 23/00;**
G01N 2021/6415

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Vilnius University**
  **01513 Vilnius (LT)**
• **Korzhik, Mikhail**
  **220020 Minsk (BY)**

(72) Inventors:
• **Korzhik, Mikhail**
  **220020 Minsk (BY)**
• **Tamulaitis, Gintautas**
  **LT-08451 Vilnius (LT)**
• **Nargelas, Saulius**
  **LT-11317 Vilnius (LT)**

(74) Representative: **Klimaitiene, Otilija**
  **AAA Law**
  **P.O.Box 33**
  **A. Gostauto street 40B**
  **03163 Vilnius (LT)**

(54) **ESTIMATING THE LUMINESCENCE KINETICS OF RARE EARTH IONS IN A TRANSPARENT LUMINESCENT MATERIAL**

(57)　Method and aparatus to measure the rising part in the luminescence kinetics of rare earth ions in transparent luminescent material with time resolution not achievable in the prior art are disclosed. The method is based on the measurement of transient optical absorption due to electrons populating the radiative level in the rare earth ion using short pump and probe pulses of photons with appropriate photon energy. Both the luminescence of the transparent luminescent material and the signal of transient absorption are proportional to the population of the radiative level of a rare earth ion, thus the time evolution of transient absorption signal follows the time evolution of luminescence. The time resolution in the transient absorption measurements is limited just by the duration of laser pulses exploited and might be as short as 10 fs (in examples, we demonstrate 300 fs). Meanwhile, the time resolution of other techniques which are currently in use for measuring or estimating the luminescence kinetics, have physical limitations either due to the response time of photodetectors and other electronic devices or to a low efficiency in measurements with a high time resolution. The substantial gain in time resolution enabling the measurement of the rising part of luminescence response in subpicosecond domain is of especial importance for, e.g., development, selection and testing of fast scintillators, which are on demand in high-spatial-resolution medical imaging and other applications.

Fig. 2

EP 4 027 133 A1

**Description**

TECHNICAL FIELD

This invention relates to the field of materials metrology, characterization and treatment. More specifically, it discloses a method and apparatus to measure and estimate the rising part of the luminescence kinetics of rare earth ions in a transparent luminescent material with the time resolution in subpicosecond domain. Accurate estimation thereof provides the basis of the correct feedback to the materials producers.

BACKGROUND ART

Luminescent materials are used for many purposes, such as lighting, lasing and the detection of photons and particles in a wide energy range including ionizing radiation of different kinds. In general, luminescent materials are characterized in order to determine whether the materials are suitable for their intended purposes.

The luminescent materials at certain excitation emit photons with energies in the optical range including infrared, visible, and ultraviolet photons. The energy distribution of the emitted photons determines the luminescence spectrum.

The radiative transitions resulting in the luminescence occur at the luminescence centers in the material.

The luminescent centers are either the structural units of the material or defects unintentionally existing or purposefully introduced into the material during the material fabrication or post-fabrication treatment.

To efficiently emit the photon outside the luminescent material without being reabsorbed, the energy of the emitting level should be within the band gap of the luminescent material.

Upon pulsed excitation, the luminescence intensity and spectrum evolve in time after the excitation. The intensity dependence on time is usually referred to as luminescence kinetics. In general, the kinetics depends on the parameters characterizing the radiating and final electronic states of the luminescent center where the photon emission occurs.

Luminescence kinetics follows the population of the radiative electronic state of the luminescent center. Measuring the time evolution of population of the radiation level of the luminescence center enables estimation of the parameters of the luminescence kinetics. In general, the radiating level is not instantly populated, and the population rate depends on the kind of excitation. The light emission is referred to as photoluminescence upon excitation by optical photons, cathodoluminescence upon electron beam excitation, and scintillation when gamma-quanta or X-rays are applied for excitation. Luminescence kinetics might be of interest for all the kinds of excitation provided that the excitation is in a pulsed mode.

A time span between the moment when the excitation pulse enters the luminescent material and the moment when the population of radiating level reaches its peak value characterizes the rising part of the kinetics, whereas the decay part of the kinetics from its peak value to certain level, usually close to zero intensity, is a result of the balance between the rates of the level population and its depopulation of different origin. One of the most frequently used method to change the luminescence spectrum and luminescence kinetics is the rearrangement of composition or structure of luminescent material or changing the local environment in the vicinity of the luminescent center by technological means.

The decay part of the kinetics for majority of luminescent materials is in nanosecond domain or longer. There is no practical difficulty to evaluate the decay part of the luminescence kinetics for variety of luminescent materials with an appropriate accuracy.

The rising part of the kinetics can vary in a wide range, from sub-picosecond domain to picoseconds or longer, which introduces difficulties in the accurate measurement of the rising part of the luminescence kinetics, particularly when it is short.

In general, the rising part depends on the way of excitation of the luminescent material. The intracenter absorption of the optical photon by a luminescent center in the luminescent material is a prompt act of electromagnetic interaction of the photon and the luminescent center. In the case of optical excitation when the kinetic energy of the absorbed photon conveyed to the excited electron is insufficient for autoionization, the excitation occurs in a small volume limited usually by the outer electronic shell of the ion or an anion coordination sphere around either the cation or an empty cationic position. The rising part of the luminescence kinetics is limited by the intracenter relaxation of electronic excitations and is in the subpicosecond domain. When the photon energy exceeds the threshold for photon multiplication, the kinetic energy of the excited electron is sufficient for the production of additional electronic excitations. The interaction proceeds in several steps: creation of primary and secondary pairs, their thermalization and transfer of the excitation to the luminescent center. The excitation becomes delocalized and the radiation process may involve a number of luminescence centers, which are excited at different moments within a short time period equal up to a few picoseconds. The rising part of the luminescence kinetics becomes longer but is still in the range of picoseconds. When the energy of the exciting photons or charged particles is sufficient for photo-ionization of the inner shells of the atoms of the luminescent material, the electrons of the material become involved in the electromagnetic interaction via the following energy-dependent and competitive processes: photoelectric absorption, Compton scattering and electron-positron pair production. One act of the excitation with a high energy particle or photon involves a huge number of luminescence centers in the luminescence material, however, the excitation transfer does not change substantially the rising part of the kinetics. For a plurality of the luminescent materials, it remains in a range not longer than 10 ps.

There is a practical demand to evaluate the rising part of the luminescence kinetics. The rising part of the luminescence kinetics is important for a variety of applications. In one embodiment the luminescent material is utilized as scintillation material. The scintillation material is exploited for the detection of ionizing radiation. There is a correlation between the rising part of the luminescence kinetics in the scintillation material and its capability for fast timing [1], [2]. The shorter the rising part of the luminescence kinetics is, the better is the coincidence time resolution for Ce-doped scintillation materials when applied for the detection of gamma-quanta, which occur due to annihilation events.

One way to estimate the rising part of the kinetics is measuring the time evolution of the electron spin concentration at the electronic level of luminescent center. This can be done by means of electron relaxometry. However, the number of luminescent materials, which can be characterized for the time evolution of spin concentration is limited by applicability of this technique only for the luminescent centers containing unpaired spins of the outer electrons, whereas the time range covered in the measurements is limited by the frequency applied in these measurements which are being carried out in the radiofrequency range up to 30 GHz corresponding to a time resolution of not better than 30 ps.

The apparatus is configured to perform the measurements of one or more properties of the luminescence centers at various temperatures and excitation conditions.

Several methods can be used to characterize the rising part of the luminescence kinetics. In one type of the methods, the time-resolved luminescence spectroscopy is performed using a streak camera: the luminescence excited, for example, with a pulsed laser source, is transformed into photoelectrons, which are accelerated to a fluorescent screen and deflected by applying a linearly increasing transversal electric field, so that the variation of light intensity in time is transformed into a spatial profile of fluorescence intensity. The profile is recorded by an array of photodetectors. As a result, the photoelectrons form an image on the fluorescence screen. The intensity distribution of the image provides the distribution of the luminescence signal studied both in time and wavelength, provided that the system is also equipped with a spectrometer. In fact, when luminescent material is bright, even a single pulse might be sufficient to record the luminescence spectrum and kinetics. However, the time resolution in the recording of the rising part of the luminescence kinetics by using a streak camera is limited by the instrumental function of the camera and cannot be improved by shortening the excitation laser pulse down to the subpicosecond range. Typical time resolution of streak cameras is ~2 ps., whereas the state of the art of the streak cameras ensure the best time resolution at the level of 500 fs.

Application examples using streak cameras are disclosed at least in these patent sources EP0511823B1, GB2220063A, GB2230602A, US6914720, US8063386. The streak camera in the patent EP0511823B1 discloses providing extremely high time resolution of several tens of femtoseconds (30 fs), however, according to the description, such resolution is possible only for the correspondingly narrowed (restricted) photon energy range, i.e., *"characterised by means provided between said photocathode and said pair of sweep electrodes for selecting from the photoelectrons emitted from said photocathode a portion whose energy falls within an energy range more narrow than said energy distribution"*.

The rising part of the luminescence kinetics is also being characterized by using up-conversion in nonlinear crystals. Sum-frequency generation in the nonlinear crystal is exploited in such systems. The luminescence light under study and a high-power short laser pulse are directed to an appropriate nonlinear crystal. When both pulses coincide in space and time, the signal at the sum-frequency is generated in the crystal. As the delay between the light pulse under study and the short laser pulse is changed, the intensity of the sum-frequency signal reflects the time evolution of the light pulse. Using this technique, the time resolution of the measurement of the rising part of the luminescence kinetics is limited by laser pulse width only. The signal intensity at the sum-frequency depends on the crystal non-linear properties and the product of the light power of both pulses. Therefore, high-power laser sources are required to obtain detectable signal. However, the increase in the laser power to achieve acceptable conversion efficiency is limited by the threshold of optical damage of the nonlinear crystal. As a result, the conversion efficiency in such systems does not exceed a few percent and is insufficient for many applications when the kinetics of weak luminescence has to be measured.

Time-correlated single photon counting technique is another method frequently in use. In this method, the delay between the moment of the short-pulse excitation of the sample and the moment of detection of the first photon from the excited sample is recorded. The measurements are repeated shot by shot, and the dependence of the frequency of the detection events on the delay is accumulated. However, the capability of the method to record the rising part of the luminescence kinetics is limited by the response function of the photodetector applied. Moreover, the method is time consuming due to the requirement of low signal intensity to ensure the detection of no more than one photon per one excitation pulse.

The technique extensively exploited for characterization of response time of scintillating materials and based on exploitation of an excitation source simultaneously emitting two gamma quanta has also to be mentioned as a variety of time resolved luminescence measurement technique based on start-stop approach. One of the simultaneously emitted gamma quanta is detected by a fast scintillation detector and used as a start pulse, whereas the stop pulse is obtained from the scintillation material under study. This technique requires sophisticated fast read-out electronics and its time resolution is fundamentally limited by the time response of the fast scintillating detector, being of the order of 50 ps in the state of the art devices in exploitation.

None of the methods discussed above exhibits a combination of properties necessary to extend the measurement of the rising part of luminescence kinetics into subpicosecond domain. For most prototypes, the time resolution is limited by the response function of the photo-detectors. The most advanced photo-detectors based on micro-channel plates or silicon photomultipliers do not provide the response function better than a few picoseconds. In another embodiment using up-conversion, the time resolution is limited by laser pulse width, however, the capability of increasing the sensitivity of the method, which becomes an issue upon application of short laser pulses delivering a small number of luminescence photons, by increasing the power of the laser pulses is limited by the threshold for optical damage of the nonlinear crystals used for generation of the up-converted signal. It can be demanded that the method for measuring the rising part of the luminescence would be not dependent on the response function of the photoreceivers and had sensitivity sufficient for performing measurements with time resolution in subpicosecond domain.

One more method for measuring optical transients is the pump-probe method, for example, disclosed in US patent US8982451B2, *"by measuring the intensity of the reflected light while gradually changing the delay time of the probe pulse with respect to the pump pulse, change in the reflectance of the sample between before and after the excitation can be observed with the time resolution comparable to the duration of the laser pulse. This time resolution falls within a picosecond to femtosecond range"*.

## SUMMARY OF THE INVENTION

Method and apparatus to measure the rising part in the kinetics of the interconfiguration luminescence of rare earth ions in a transparent material with time resolution not achievable in the prior art are disclosed. The method is based on the measurement of transient optical absorption due to electrons populating the radiative level in rare earth ions after their short-pulse excitation by using short probe pulses of optical photons with appropriate energy. Both the intensity of the interconfiguration luminescence of rare earth ions and the signal of transient absoption are proportional to the population of the radiative level, thus the time evolution of transient absorption signal follows the time evolution of luminescence. The accuracy of time resolution in the transient absorption measurements is limited just by the (1) duration of laser pulses and (2) the minimal delay time step between the pump and probe pulses provided by the optomechanical system exploited and might be as short as 10 fs (in examples, we demonstrate 300 fs) and 50 fs, respectively. Meanwhile, the time resolution of other techniques for measuring or estimating the luminescence kinetics, which are currently in use, either has physical limitations due to the response time of photodetectors and other electronic devices or are time consuming due to low efficiency of the measurements. The substantial gain in accuracy enabling the measurement of the rising part of luminescence response in subpicosecond domain is of especial importance for, e. g., development, selection and testing of fast scintillators, which are on demand in high-spatial-resolution medical imaging and other applications.

The novelty of the invention is in capability to measure the rising part of luminescence kinetics with accuracy in the subpicosecond domain and characterize the properties of populating the excited electron state in said rising part, which is not achievable using the techniques in the prior art.

The method and apparatus employ the pump-probe method which is exceptionally applicable for this purpose and which further is specifically configured with parameters allowing to perform precise and low time consuming measurements of the rising part of luminiscence kinetics in this narrow time range. Further, the obtained measurement data are processed to estimate the desired properties of the investigated material such as the time evolution of electronic populations and the dynamics of transitions between the excited levels. For certain investigated materials, the relation between the measured luminescence kinetics and the investigated material properties is straightforward, for others, additional data processing and calculation functions may comprise nonlimiting embodiments of the disclosed estimation method.

The invention is applicable in the areas of developing, invesigating and exploitation of devices with fast luminescence response, wherein the rising part of the luminescence kinetics becomes more steep and difficult to measure. High-spatial-resolution medical imaging devices in general, and positron emission tomography (PET) in particular might be pointed out as nonlimiting examples. Computed tomography (CT) scanners with X-ray photon counting might be considered as emerging field of application in view of expanding CT exploitation.

## DESCRIPTION OF DRAWINGS

To understand the specific characteristics of the invention and appreciate its practical applications, the following pictures and graphs are provided and referenced hereafter. Figures are given as examples and should not limit the scope of the invention.

**Fig. 1** illustrates an energy level scheme of a luminescent center in the luminescent material and depicts the aspects of a schematic structure of optical transitions in luminescent material;

**Fig. 2** illustrates time evolution of the population of a radiative level and luminescence kinetics of the luminescence center in the luminescent material and depicts the aspects of the kinetics;

**Fig. 3** illustrates the scheme of energy level of a Ce3+ ion in luminescent material;

**Fig. 4** depicts the aspects of a scheme of the apparatus to measure luminescence kinetics.

**Fig. 5** illustrates the kinetics of the transient absorption measured at room temperature in three samples of luminescent materials: (Lu-Y)2SiO5 doped with Ce (1) and codoped with Ce and Ca at content of 5 ppm (2) and 30 ppm (3), which were optically excited to the first 5d1 (a) and third 5d3 (b) levels of Ce3+.

**Fig. 6** illustrates the kinetics of the transient absorption measured at room temperature in luminescent materials: Gd3Al2Ga3O12 solely doped with Ce (1) and codoped with Ce and Mg at content of 7 ppm (2) and 10 ppm (3), which were optically excited to the first 5d1 (a) and second 5d2 (b) levels of Ce3+.

**Fig. 7** illustrates a comparison of kinetics of the transient absorption measured at room temperature in luminescent materials: (Gd0.5-Y0.5)Al2Ga3O12 (1) and Gd3Al2Ga3O12 (2) codoped with Ce and Mg which are optically pumped into the second level 5d2 of Ce3+.

DRAWINGS - Reference Numerals

**1** Conduction band of luminescent material;

**2** Valence band of luminescent material;

**3** Radiative level of a luminescent center;

**4** Ground level of a luminescent center;

**5** Intracenter absorption via optical transition at the luminescent center;

**6** Radiative recombination between radiative level 3 and ground level 4 at the luminescent center;

**7** Absorption transition from ground level 4 to intraconfigurational levels in the conduction band 1 or directly to the conduction band 1;

**8** Transient absorption transition from excited state (radiating level) 3 to intraconfigurational levels in the conduction band 1 or directly to the conduction band 1;

**9** Time evolution of luminescence kinetics;

**10** Time evolution of the population of the radiative level after short-pulse excitation;

**11** The ground state $^2F_{7/2,5/2}$;

**12** Radiative level 5d1 of Ce3+;

**13** Level 5d2, in the conduction band (1);

**14** Level 5d3, in the conduction band (1);

**15** Level 5d4, in the conduction band (1);

**16** Level 5d5, in the conduction band (1);

**17** Pulsed light source (PLS), laser beam source;

**18** Laser beam splitter (SP);

**19** Directing mirror 1 (M1);

**20** Directing mirror 2 (M2);

**21** Opto-Mechanical System (OMS) providing optical path of variable length;

**22** Pump source (PS), initiated by PLS;

**23** Parabolic mirror 1 (PM1);

**24** Super Continuum (SC) unit;

**25** Lense 1 (L1);

**26** Parabolic mirror 2 (PM2)

**27** Luminescent material, sample of the luminescent material being investigated or tested;

**28** Iris;

**29** Lense 2 (L2);

**30** Lense 3 (L3);

**31** Selective Photo Detector (SPD);

**32** Processor (P) for processing and visualising the measured signals;

**33** Pump pulse;

**34** Probe pulse.

DETAILED DESCRIPTION OF THE INVENTION

Disclosed are a method and an apparatus for estimating the rising part of the luminescence kinetics through measuring the kinetics of the population of the emitting level of a luminescence center in transparent luminescent material with a time resolution improved in view of the methods and apparats in the current state of the art. The time evolution of the disclosed method is not limited by the response function of the photo-receivers exploited in the measurements. In one or more embodiments, the disclosed method exploits the changes in the properties of the light pulses detected after passing the transparent luminescent material, which are imposed by the pulses of photons or high-energy particles exciting the emitting centers in the transparent material, and ensures the time resolution superior to that feasible to achieve using other time-resolved techniques.

A detailed description of one or more embodiments of the disclosed method and apparatus are presented herein by way of exemplification and not limitation with reference to the Figures.

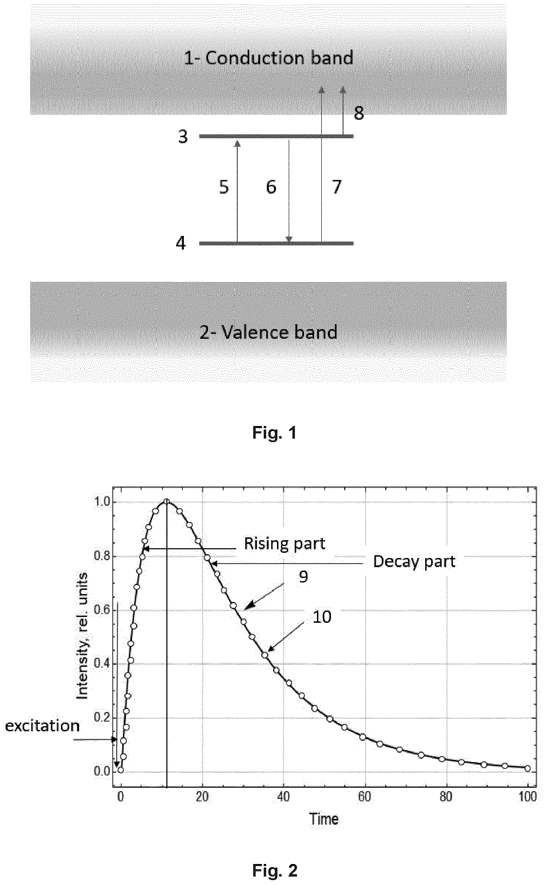

Fig. 1 illustrates an example of an energy level scheme of a luminescent center in luminescent material, not on scale. The luminescent material has the conduction band 1 and the valence band 2. The luminescent center contains a radiative level 3 and the ground level 4.

Still referring to Fig. 1, the following optical transitions occur at the luminescent center: i) intracenter absorption 5 and radiative recombination 6 occur between the radiative level 3 and ground level 4, ii) absorption transition 7 from the ground level 4 to intraconfigurational levels in the conduction band 1 or directly to the conduction band 1, iii) transient absorption transition 8 from the excited state 3 to intraconfigurational levels in the conduction band 1 or directly to the conduction band 1. The intensities of the transitions depend on the parameters of the levels and the selection rules for the corresponding transitions.

Figure 2 illustrates the luminescence kinetics 9 and the time evolution of the population of the radiative level 10 after short-pulse excitation, both of them coincide in shape. The time span between the moment the short excitation pulse enters the luminescent material and the moment the luminescence intensity reaches its peak value is the rising part of the luminescence kinetics, whereas the decay part of the kinetics is the part of the kinetics between the peak value and certain level determined by the noise parameters of the photoreceiver used to measure the luminescence. The shapes of the rising and decay parts of the scintillation kinetics are determined by the physical processes governing the relaxation and transfer of electronic excitation and recombination of nonequilibrium electron-hole pairs in the luminescent material [6].

Still referring to Fig. 2, in many luminescent materials, the luminescent center is one of the rare-earth ions. Intra-configuration luminescent transitions $4f^n \rightarrow 4f^n$ of trivalent ions Pr, Nd, Sm, Eu, Gd, Tb, Dy, Ho, Er, Tm, and Yb provide numerous radiative recombination channels resulting in luminesce in a wide spectral range from infrared to ultraviolet. The decay part of the luminescence kinetics of radiating $4f^n$ levels is in millisecond or microsecond ranges, its measurement does not imply any difficulties for accurate measurements. The rising part of the luminescence kinetics is affected by excitation transfer to radiative centers, carrier trapping, capture to the centers of nonradiative recombination, and the rate of intracenter relaxation at the centers of radiative recombination.

The rare-earth ions $Ce^{3+}$, $Pr^{3+}$, $Nd^3$, $Er^{3+}$, $Eu^{2+}$ have inter-configuration radiative transitions $4f^{n-1}5d \rightarrow f^n$, which are both spin- and parity-allowed. The inter-configuration luminescence of $Nd^{3+}$, $Er^{3+}$, and $Tm^{3+}$ is localized in the spectral region above 45000 $cm^{-1}$ and is observed only in fluoride-type luminescent materials. The ions $Ce^{3+}$, $Pr^{3+}$, and $Eu^{2+}$ are extensively exploited luminescent centers with fast luminesce kinetics in a variety of luminescent materials. The luminescence intensity also varies in a wide range depending on the luminescence efficiency and reabsorption conditions in a particular material. $Ce^{3+}$ ions have a rather simple structure of energy levels: the ground level consists of two spin-orbit components $^2F_{7/2,5/2}$ with an energy difference of 2400 $cm^{-1}$. As the effect of the crystal field on the $f$-orbital of a rare-earth ion is much weaker than the spin-orbit coupling, this energy gap between the components $^2F_{7/2,5/2}$ is approximately the same in many compounds. On the contrary, the radiative level, the $5d$-level, is strongly influenced by ligands. Its radiative state is $5d^14f^0$. The electronic configuration of $Pr^{3+}$ is $f^2$, the ground level is $^3H_4$, radiative transitions $4f^15d \rightarrow f^2$ occur to numerous levels of $f^2$ electronic configuration [4]. The decay of the luminescence involving radiative levels $5d^14f^0$ and $4f^15d$ is in nanosecond domain, its measurement does not imply any difficulties for accurate measurements. The rising part of the luminescence kinetics is in subpicosecond and picosecond domains and depends on the kind of excitation, its accurate measurement with sufficient time resolution has limitations. Divalent rare-earth ions $Eu^{2+}$ might also serve as centers for bright interconfiguration luminescence. The intense blue 4f $^65d^1 \rightarrow 4f^7$ luminescence band of $Eu^{2+}$ ion has been observed in oxide and many alkali halide crystals.

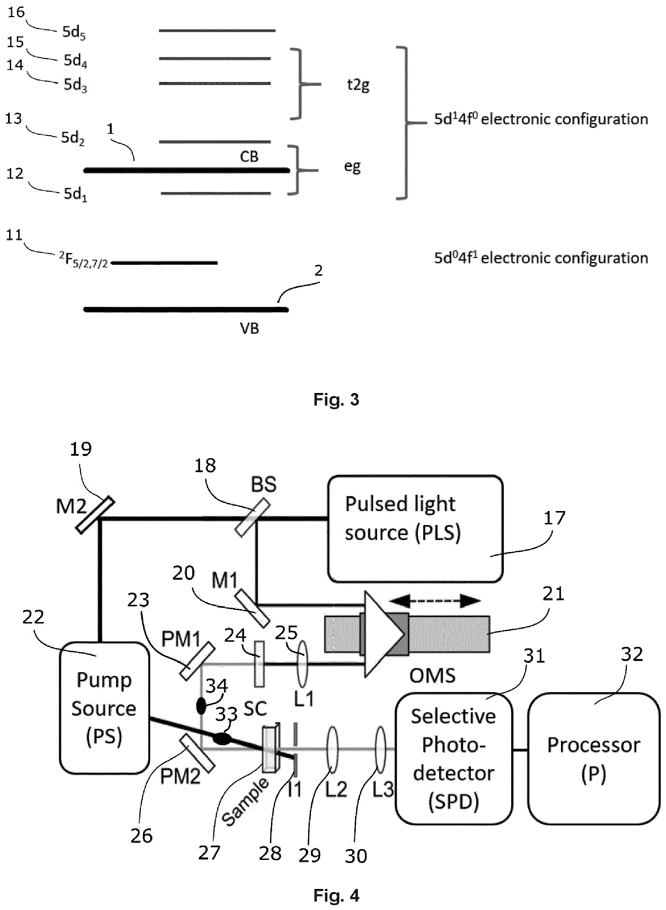

Figure 3 illustrates an energy level scheme of $Ce^{3+}$ ion. The ground state $^2F_{7/2,5/2}$ (11) and radiative level 5d1 (12) of Ce3+ are located in the energy gap between the conduction (1) and valence (2) bands. As a rule, Ce3+ ion in luminescent material is localized in specific anionic coordinations with coordination numbers 12, 8, 7, or 6. Most frequently, ligands are either oxygen or halide ions or anionic complexes. In crystal field with symmetry lower than spherical, 5d electronic configuration is split in five components: 5d1 (12); 5d2 (13); 5d3 (14); 5d4 (15); 5d5 (12-16). In 7-,8-,12-oxygen coordinations, levels 12 and 13 are the components of a doublet $e_g$, whereas levels 14, 15 and 16 form a triplet

$t_{2g}$. The selection rules for transitions between the different levels of the 5d electronic configuration [3] predetermine that internal optical transitions between the components within doublet $e_g$ and triplet $t_{2g}$ are forbidden, whereas external transitions between the components of triplet and doublet are allowed. Levels 13-16 are depopulated due to fast electron relaxation to the conduction band and even faster intracenter relaxation to the lowest excited state 5d1 at any kind of excitation of luminescent material.

Figure 4 depicts the aspects of a schematic structure of the apparatus for measuring luminescence kinetics. The apparatus includes Pulsed Light Source (PLS) (17), the output of which is split by a Beam Splitter (BS) in two beams. One beam, a probe beam, is directed by Mirror (M1) onto Opto-Mechanical System (OMS), which provides an optical path of variable length, which is tunable with a precision of 10 fs on time scale. After OMS, the probe beam passes a Super Continuum (SC) unit, where its spectrum is converted into a white light continuum. Using parabolic mirrors (PM1, PM2), the white light continuum pulse is focused on the sample of the luminescent material. After passing the sample, the probe beam is directed by focusing system (consisting of Lenses L2, L3) to a Selective Photodetector (SPD), the electric signal of which is processed by a Processor (P) to estimate the property.

Still referring to Fig. 4, the OMS is configured in a range of at least 0 - 500 ps to tune the delay between pump and probe pulses.

Still referring to Fig. 4, in one embodiment PLS is a solid-state laser, configured to generate photons in pulses with the pulse width in a range of 0.02 - 20 ps. Non-limiting examples of the technical realization of Pump Source (PS) are now discussed.

Still referring to Fig. 4, the second part of the beam split by BS is sent to PS by Mirror M2. In one embodiment, PS includes wavelength converters (harmonics generators, optical parametric amplifiers, etc.) to produce a light pulse with photon energy variable in a wide spectral range from 1.2 to 10 eV (1030 to 124 nm) suitable for selective excitation of a specific luminescent center in luminescent material. The harmonics generators may be arranged on a base of nonlinear crystals $\beta$-BBO, which enable doubling or quadrupling the light frequency to extend the pump photon energy to UV, whereas optical parametric amplifiers may be exploited to produce the light with finely tuned photon energy, both are combined to provide photons with the energy corresponding to the energy of absorption transitions $^2F_{7/2,5/2} \rightarrow 5d_{1,2,3,4,5}$. When the pump pulse enters the sample of the luminescent material, the pump photons are absorbed by Ce3+ and the population of $5d_1$ level increases.

Still referring to Fig. 4, the time evolution of the Transient Absorption (TA) spectrum is measured by delaying the probe pulse with respect to the pump pulse in the range from tens of femtoseconds to, typically, 10 ns. The TA is measured as a differential absorption defined as

$$TA(\lambda) = \ln\left(\frac{I(\lambda)_{unexc}}{I(\lambda)_{exc}}\right) \qquad (1)$$

where $I(\lambda)_{unexc}$ and $I(\lambda)_{exc}$ are the probe light intensities measured when the sample is unexcited and excited by the pump pulse, respectively.

Still referring to Fig. 4, in one or more embodiments, pump source (PS) (22) is a source of X-ray pulses initiated by optical pulses of PLS (17). PLS is configured with harmonics generator and optical parametric amplifier delivering photons to initiate pulses of electrons from cathode of an X-ray tube, which bombard anode of the tube and produce short pulses of X-rays. The pulsed X-ray source is configured to excite luminesce material in a correlated way with probe pulses. X-rays are absorbed and produce photoelectrons from the inner electronic shells of the atoms in the luminescent material. The electrons lose their energy by ionization resulting in multiple generation free carriers, which deliver their energy to Ce3+ ions [5].

Still referring to Fig. 4, in one or more embodiments, Pump source (22) is a source of charged particles, electrons, which are emitted with certain kinetic energy in electron gun in pulses initiated by pulses of PLS. The electrons are absorbed and lose their energy by ionization in the luminescent material resulting in multiple generation of free carriers, which deliver their energy to Ce3+ ions in the same way as in the case of X-ray excitation.

Still referring to Fig. 4, the SPD is configured to detect light pulses of at least one of electric current or voltage to detect the probe beam in a spectral range of interest. In one embodiment the probe light pulses transmitted through the sample are dispersed by a spectrograph and the spectrum is recorded using, e.g., an n-type Metal-Oxide-Semiconductor (NMOS) linear image sensor. To measure the spectrum of the probe beam transmitted through the sample with and without excitation by the pump pulse, a chopper is used to periodically open and block the pump pulses.

Still referring to Fig.4, the SPD is connected to a processor P to compare the transmitted probe pulses with and without the pump pulse, at least in one of electric current or voltage to estimate the property.

It can be appreciated that the apparatus having the PLS has improved time resolution for the measurement of the rising part of luminescence kinetics. A general drawback of the methods in prior art is that the time resolution of the measurement is limited either by the response functions of the essential elements of the measuring setup, particularly photo-receivers, or by insufficient sensitivity when the targeted time resolution is high, particularly in subpicosecond domain.

The disclosed method is devoid of this flaw; its time resolution does not dependent on the response functions of the photo-receivers. The the time resolution in the measurements of the rising part of the luminescence kinetics is limited by the width of the PLS (17) pulse, which might be as short as 20 fs in the state of the art. In the method disclosed, the registration of the luminescence photons is substituted by probing of population of the emitting center and has no flaws inherent for prototype methods.

It is appreciated that the intracenter absorption transitions from radiative level 5d1 of Ce3+ ion are in the spectral range, which does not overlap with the optical absorption transitions from the ground level: $^2F_{7/2,5/2} \rightarrow 5d_{1,2,3,4,5}$.

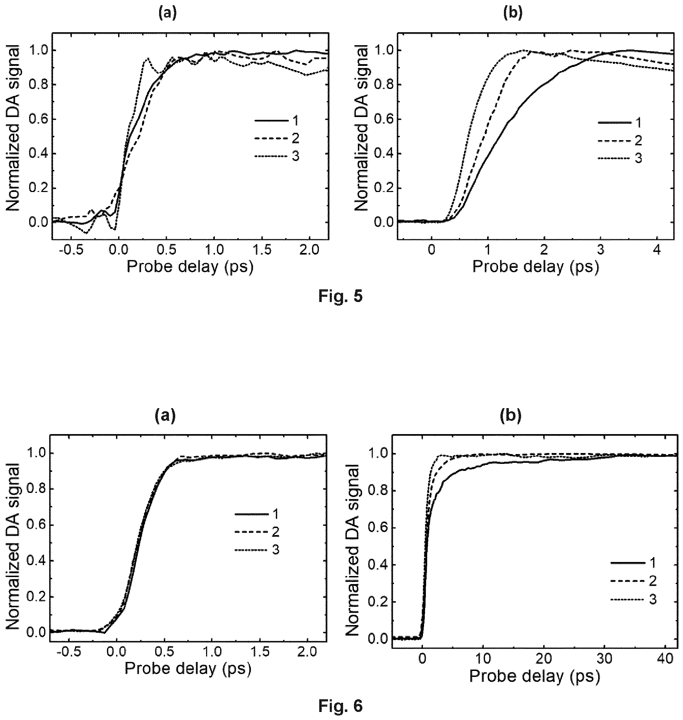

First example of the rising part of the luminescence kinetics measurement by estimating the time evolution level 5d1 population is the measurement carried out in yttrium-lutetium silicate (LYSO) crystal doped with Ce. The PLS is a femtosecond laser with Yb:KGd(WO$_4$)$_2$ as active material, which is configured to have a pulse width of 250 fs and and provide pump photons with energies corresponding to intracenter optical transitions at Ce$^{3+}$ ion $^2F_{7/2,5/2} \rightarrow 5d_{1,2,3,4,5}$. In Ce-doped LYSO single crystals, a photon with energy 3.46 eV (358 nm) resonantly excites the Ce$^{3+}$ ion to its first excited level 5d$_1$. The level is below the bottom of the conduction band and acts as a radiative level of Ce$^{3+}$ activator. Photon energy of 4.82 eV (257 nm) corresponds to the optical transition to the third excited Ce$^{3+}$ level 5d$_3$, which is in the conduction band. In this case, the excited electron has two routes for the relaxation from the 5d$^3$ to the radiative level 5d$^1$: intracenter relaxation from 5d$_3$ to 5d$_2$, and further to 5d$^1$ and relaxation via the extended states in the conduction band. The second route might involve also trapping and detrapping of the nonequilibrium electron and takes longer time. Fig. 5 demonstrates time evolution of the population of 5d1 level after short-pulse excitation to level 5d1 (a) and level 5d3 (b). Kinetics of TA signal are provided at a fixed probe photon energy reflecting the transient absorption from level 5d1 for 6 LYSO:Ce samples with different codoping. At excitation to 5d1 level, the rising part of the kinetics coincides with the leading front of the excitation pulse indicating prompt population of the 5d1 level. At the excitation to 5d3, relaxation via the extended states in the conduction band occurs. Contrary to direct intracenter relaxation, this process introduces a longer way to electrons to reach 5d1 level and causes slowing of the rising part of the kinetics (Fig. 5 (b)). The method disclosed allows estimating the change of the rising part of the kinetics with the accuracy not worse than the width of the laser pulse exploited in the experiment, 250 fs in the example.

Second example of the measurement of the rising part of the luminescence kinetics by measuring the kinetics of the transient absorption is the measurement performed at room temperature in the ternary garnet-type luminescent material Gd3Al2Ga3O12 (GAGG) solely doped with Ce and codoped with Ce and Mg. Ce3+ ions were excited to the first 5d$_1$ and second 5d$_2$ levels. The PLS is a femtosecond laser with Yb:KGd(WO$_4$)$_2$ as active material, which is configured to have a pulse width of 250 fs and and provide pump photons with energies corresponding to intracenter optical transitions at Ce$^{3+}$ ion $^2F_{7/2,5/2} \rightarrow 5d_{1,2}$. In Ce-doped GAGG single crystals, a photon with energy 2.8 eV (443 nm) resonantly excites the Ce$^{3+}$ ion to its first excited level 5d$_1$. The level is below the bottom of the conduction band and acts as a radiative level of Ce$^{3+}$ activator. Photon energy of 3.63 eV (342 nm) corresponds to the optical transition to the second excited Ce$^{3+}$ level 5d$_2$, which is in the conduction band. Fig. 6 demonstrates the time evolution of the population of 5d1 level after short-pulse excitation to level 5d1 (a) and level 5d2 (b). Kinetics of TA signal are provided at a fixed probe photon energy reflecting the transient absorption from level 5d1 for 3 GAGG:Ce samples with different codoping. At excitation to 5d1 level, the rising part of the kinetics coincides with the leading front of the excitation pulse indicating prompt population of the 5d1 level. At the excitation to 5d2, relaxation via the extended states in the conduction band occurs. Contrary to direct intracenter relaxation, this process introduces a longer way to electrons to reach 5d1 level and causes slowing of the rising part of the kinetics (Fig. 5 (b)). Rising part of the kinetics becomes substantially shorter when the crystal is codoped with Mg. The method disclosed allows estimating the change of the rising part of the kinetics with the accuracy defined by convolution of pump and probe pulses, i.e., is not worse than the width of the laser pulse multiplied by a factor of 1.41 for two Gaussian-shaped pulses exploited as pump and probe (~300 fs in the example provided in Fig. 6). This accuracy provides optimization of the timing properties of the luminescent material by using an appropriate codoping.

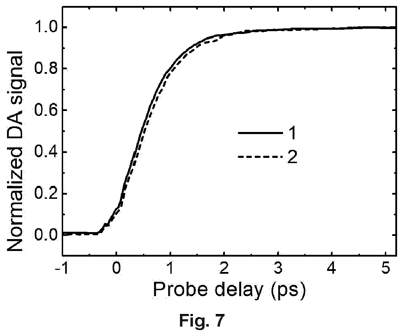

In the third example, the luminescence kinetics measured by estimating TA kinetics are compared in two samples with fast luminescence response: ternary Gd3Al2Ga3O12 (GAGG) and quaternary (Gd0.5-Y0.5)Al2Ga3O12 (GYAGG) codoped with Ce and Mg. The luminescent materials are excited to the second excited level 5d$_2$. The PLS is a femtosecond laser with Yb:KGd(WO$_4$)$_2$ as active material, which is configured to have a pulse width of 250 fs and provide pump photons with energies corresponding to intracenter optical transitions at Ce$^{3+}$ ion $^2F_{7/2,5/2} \rightarrow 5d_{1,2}$. In Ce-doped GAGG single crystals, a photon with energy 3.65 eV (340 nm) excites the Ce$^{3+}$ ion to its second excited level 5d$_2$, which is in the conduction band. Figure 7 illustrates the time evolution of the population of 5d1 level by measuring the transient absorption from level 5d1 level 5d3. The spectrum of the pump-induced optical absorption has been probed at a variable delay by using the OMS (21).

Kinetics of TA signal are provided at a fixed probe photon energy reflecting the transient absorption from level 5d1 for GAGG:Ce,Mg and GYAGG:Ce,Mg samples in Fig. 7. The samples have different composition but the same codoping by magnesium, which makes the rise time of luminescence response faster. As a result, the kinetics in both samples coincide.

The TA spectrum, as defined by formula (1), has been measured as a function of the delay between the pump and probe pulses. At the pump in 5d2 the kinetics is similar for ternary and quaternary garnets, an admixture of the Y to Gd in the crystalline matrix does not change the relaxation via the extended states in the conduction band. The rising part of the kinetics remains practically the same when 50% of Gd is substituted with Y, provided that both crystals are codoped with Mg. The method disclosed allows estimating the change of the rising part of the kinetics with an accuracy not worse than the width of the laser excitation pulse and provides guiding for the variation of the luminescence kinetics properties by varying the composition of the luminescent material.

The method disclosed herein, ensures a high time resolution and has several advantages over prior art. The TA technique exploits all-optical contactless signal readout, ensures a high repeatability and has three key features important for characterization of luminescence kinetics, particularly its rising part, in luminescent materials: i) the time resolution of the measurements is limited just by the laser pulse duration, ii) the technique enables selective excitation via specific optical transitions targeted in luminescent material, iii) the transient absorption is simultaneously measured as a function of time and spectral position, thus, enabling reliable discrimination of the signal to be detected from the contributions of other transient processes in luminescent material.

Further, various other components may be introduced into the disclosed apparatus to extend its capabilities. For example, a laser diode might be used instead of solid state laser to make the apparatus substantially more compact and less expensive, introduction of cooling or heating would enable the measurements at different temperatures, whereas magnets, transmitters, receivers, transceivers, antennas, controllers, etc. may be included in support of the various aspects discussed herein or in support of other functions beyond this disclosure.

Elements of the embodiments have been introduced with either the articles "a" or "an." The articles are intended to mean that there are one or more of the elements. The terms "including" and "having" are intended to be inclusive such that there may be additional elements other than the elements listed. The conjunction "or" when used with a list of at least two terms is intended to mean any term or combination of terms. The term "configured" relates to one or more structural limitations of a device that are required for the device to perform the function or operation for which the device is configured.

The scheme of apparatus depicted herein is just an example. There may be many variations to this scheme or the components (or operations) described therein without departing from the spirit of the invention. For instance, the elements may be arranged in a different order, th beams might be modified or additional beams may be added. All of these variations are considered a part of the claimed invention.

It will be recognized that the various components or technologies may provide certain necessary or beneficial functionality or features. Accordingly, these functions and features as may be needed in support of the appended claims and variations thereof, are recognized as being inherently included as a part of the teachings herein and a part of the invention disclosed.

While the invention has been described with reference to exemplary embodiments, it will be understood that various changes may be made, and equivalents may be substituted for elements thereof without departing from the scope of the invention. In addition, many modifications will be appreciated to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Practical importance of the invention.** Many practical applications of luminescent materials, particularly scintillators, are devoted to the measurements requiring high time resolution. In medical imaging and nondestructive inspection the high time resolution is necessary to achieve a better spatial resolution. When correlated annihilation gamma-quanta or quanta of X-rays are used for characterization of the object under study, the high time resolution becomes a mandatory.

One but non-limiting example is utilization of coincidence time resolution (CTR) in Positron Emission Tomography (PET) scanners. Two gamma-quanta, which are created due to annihilation of positron emitted by radio-isotope atom mounted into the tracer, are detected, preferably with high time resolution.

The smaller CTR is, the better are the capabilities of time-of-flight (TOF) detecting technique implemented in PET. Since the TOF difference t is proportional to the difference in the path lengths x of the two annihilation photons, it is used to define the position of the positron annihilation in the object under study with improved accuracy. Space and time uncertainties are proportional: $\Delta x \approx c \Delta t/2$, where c is the speed of light. TOF reduces the variance in the PET images by a factor proportional to $\Delta x/D$, where D is the size of the object to be imaged [3].

In high energy physics experiments, particularly experiments at colliders, the high time resolution of the scintillation detectors allows reducing the pile up problem and enables straightforward detection of very rare evens due to particle collisions.

It is appreciated that smaller CTR is provided by scintillation materials with a high light yield, and short scintillation kinetics, particularly its rising part. Shorter rising part of the scintillation kinetics can be achieved by technological means as described in [1] and [2]. An accurate measurement of the rising part of the kinetics enables efficient feedback to the producers of luminescent materials.

LIST OF NON-PATENT CITATIONS

[1] G. Tamulaitis, E. Auffray, A. Gola, M. Korzhik, A. Mazzi, V. Mechinski, S. Nargelas, Y. Talochka, A. Vaitkevičius, A. Vasil'ev, Improvement of the timing properties of Ce-doped oxyorthosilicate LYSO scintillating crystals, J. Phys. Chem. Solids, 139, 109356 (2020).

[2] G. Tamulaitis, A.N. Vasil'ev, M. Korjik, A. Mazzi, A. Gola, S. Nargelas, A. Vaitkevičius, A. Fedorov, D. Kozlov, Improvement of the time resolution of radiation detectors based on Gd3Al2Ga3O12 scintillators with SiPM readout, IEEE Trans. Nucl. Sci. 66 (2019) 1879-1888.

[3] Budinger T F (1983), Time-of-flight positron emission tomography: status relative to conventional PET. J Nucl Med 24:73-78.

[4] Kettle S.F.A. (1996) Crystal field theory of transition metal complexes. In: Physical Inorganic Chemistry. Springer, Berlin, Heidelberg;

[5] A. M. Srivastava, aspects of Pr3+ luminescence in solids, J. Lumin. 169, 445-449 (2016);

[6] M.Korzhik, G.Tamulaitis, A.Vasil'ev, Physics of Fast Processes in Scintillators, Springer, 2020, ISBN 978-3-030-21965-9.

**Claims**

1. A method for estimating the kinetics of interconfiguration luminescence of rare earth ions in a transparent luminescence material (27), the method comprising steps at least of:

   - Providing a pump energy pulse (32) into the material (27) to generate nonequilibrium carriers into excited electronic states of the material (27);

   - Providing a broadband light probe pulse (33) into the material (27) with a variable time delay after the pump pulse (32), for estimating transient absorption in the material (27);
   - Registering the spectrum of the transmitted probe pulse (33);
   - Repeating the above steps for a range of the probe pulse (33) delay values,
   - Acquisition and visualizing of the intensity of the transmitted probe pulse by means of data processing (32),

   the method **characterized in that**

   - the time delay values are used in the range from 0 ps to the delay value at which the measured signal intensity is maximal over the entire cycle of electron state excitation and relaxation; and
   - time evolution of the population of the radiative state of the material (27), which is proportional to luminescence intensity, is estimated from the time evolution of the intensity of the transmitted probe pulse over said range of the delay values.

2. The method according to Claim 1, **wherein** the pump energy pulse (32) is at least one of a light pulse, X-ray pulse, or a pulse of high-energy charged particles.

3. The method according to claim 1, **wherein** the luminescent material (27) contains a doping ion, at least by one selection from rare-earth ions.

4. The method according to claim 4, **wherein** the luminescent material (27) contains a doping ion, at least by one selection from Ce, Pr, Eu.

5. The method according to claim 5, **wherein** the luminescent material (27) contains a doping ion, at least by one selection from ions in a specific valent state Ce3+, Pr3+, Eu2+.

6. The method according to claim 1, **wherein** at least the ground electronic state of the doping ion is located in the band gap between the valence (2) and conduction (1) bands.

7. The method according to claim 1, **wherein** at least one radiative electronic state is due to d-type electronic shell.

8. The method according to claim 1, **wherein** at least one radiative electronic state of d-type is located in the band gap between the valence (2) and conduction (1) bands.

9. The method according to claim 1, **wherein** at least one excited electronic state of d-type is located in the conduction band (1).

10. The method according to claim 1, **wherein** the energy gap between the radiative electronic state and the excited electronic state of the d-type is at least in the energy range from 1.2 to 10 eV (1030 to 124 nm).

11. The method according to claims 1 to 11, **characterized in that** it is used for development, selection, testing, producing, treating and optimizing the luminescent materials.

12. An apparatus for estimating the luminescence kinetics of rare earth ion in a sample of the transparent luminescence material (27)
**wherein** according to the method of Claims 1 to 11, the apparatus comprises at least

   - A pulsed light source (17) which is a solid-state laser source configured to generate optical photons in a spectral range from 1.2 to 10 eV (1030 to 124 nm) at a pulse width of 0.02-20 ps;
   - an optomechanical system (21) to convey the light pulses to the sample of luminescent material (27) with the time delay between two pulses tunable in the range from 0 to 500 ps;
   - a photodetector (31) configured to detect the light pulses passed through the sample of transparent luminescent material (27) and to deliver the signal of at least one of electric current and voltage, correlated with the property of the light imposed by passing the sample (27);
   - a processor (32) configured to compare the probe pulses and to estimate the population of the radiative electron state using the measured signal;
   - a supercontinuum unit (24) transforming the probe pulse from the light source (17) into a broadband probe pulse (33);
   - A pump source (22) unit to generate the pump pulse (32) configured for a light pulse, an X-ray pulse, or a pulse of high-energy particles or electrons, whereas the pump pulse is initiated by the optical pulse of pulsed light source (17).

13. The apparatus according to claim 13, **wherein** the pump source (22) is configured of at least one of

   a. optical wavelength converters: harmonics generators, optical parametric amplifiers;
   b. a source of X-ray pulses;
   c. a source of high-energy charged particles emitted in an electron accelerator;
   d. a source of high-energy charged particles emitted in a cathodoluminescence tube;
   e. a source of high-energy charged particles emitted in a proton accelerator.

Fig. 1

Fig. 2

**Fig. 3**

**Fig. 4**

**(a)**

**(b)**

**Fig. 5**

**(a)**

**(b)**

**Fig. 6**

Fig. 7

Europäisches
Patentamt

European
Patent Office

Office européen
des brevets

# EUROPEAN SEARCH REPORT

Application Number

EP 21 15 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NARGELAS S ET AL: "Role of inter- and intraconfigurational transitions of Pr3+ ion in nonequilibrium carrier relaxation in garnet-type scintillators", OPTICAL MATERIALS, ELSEVIER SCIENCE PUBLISHERS B.V. AMSTERDAM, NL, vol. 111, 2 December 2020 (2020-12-02), XP086454429, ISSN: 0925-3467, DOI: 10.1016/J.OPTMAT.2020.110676 [retrieved on 2020-12-02] | 1-13 | INV. G01N21/63 G01N21/64 |
| Y | * abstract; figures 3,4 * * section 2. Experimental * ----- | 2,12,13 | |
| X | AUFFRAY E ET AL: "Picosecond transient absorption rise time for ultrafast tagging of the interaction of ionizing radiation with scintillating crystals in high energy physics experiments", JOURNAL OF INSTRUMENTATION, INSTITUTE OF PHYSICS PUBLISHING, BRISTOL, GB, vol. 9, no. 7, 11 July 2014 (2014-07-11), XP020267425, ISSN: 1748-0221, DOI: 10.1088/1748-0221/9/07/P07017 [retrieved on 2014-07-11] * abstract * * section 2 * ----- | 1-13 | |

TECHNICAL FIELDS
SEARCHED        (IPC)

G01N

-/--

The present search report has been drawn up for all claims

| Place of search | Date of completion of the search | Examiner |
|---|---|---|
| Munich | 31 May 2021 | Meacher, David |

EPO FORM 1503 03.82 (P04C01)

Europäisches
Patentamt

European
Patent Office

Office européen
des brevets

# EUROPEAN SEARCH REPORT

Application Number

EP 21 15 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NARGELAS S ET AL: "Study of electronic excitation relaxation at cerium ions in Gd3Al2Ga3O12matrix using multipulse transient absorption technique", JOURNAL OF APPLIED PHYSICS, AMERICAN INSTITUTE OF PHYSICS, US, vol. 128, no. 10, 10 September 2020 (2020-09-10), XP012249936, ISSN: 0021-8979, DOI: 10.1063/5.0015141 [retrieved on 2020-09-10] * abstract * * section II. * | 1-13 | |
| X | LUCCHINI M T ET AL: "Measurement of non-equilibrium carriers dynamics in Ce-doped YAG, LuAG and GAGG crystals with and without Mg-codoping", JOURNAL OF LUMINESCENCE, vol. 194, 4 October 2017 (2017-10-04), pages 1-7, XP085262960, ISSN: 0022-2313, DOI: 10.1016/J.JLUMIN.2017.10.005 * abstract * * section 2. * | 1-13 | |
| Y | PICÓN A ET AL: "Attosecond x-ray transient absorption in condensed-matter: a core-state-resolved Bloch model", NEW JOURNAL OF PHYSICS, INSTITUTE OF PHYSICS PUBLISHING, BRISTOL, GB, vol. 21, no. 4, 15 April 2019 (2019-04-15), page 43029, XP020339773, ISSN: 1367-2630, DOI: 10.1088/1367-2630/AB1311 [retrieved on 2019-04-15] * abstract * * section 1. * | 2,12,13 | TECHNICAL FIELDS SEARCHED (IPC) |

The present search report has been drawn up for all claims

| Place of search | Date of completion of the search | Examiner |
|---|---|---|
| Munich | 31 May 2021 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- EP 0511823 B1
- GB 2220063 A
- GB 2230602 A
- US 6914720 B
- US 8063386 B
- US 8982451 B2

**Non-patent literature cited in the description**

- **G. TAMULAITIS ; E. AUFFRAY ; A. GOLA ; M. KORZHIK ; A. MAZZI ; V. MECHINSKI ; S. NARGELAS ; Y. TALOCHKA ; A. VAITKEVIČIUS ; A. VASIL'EV.** Improvement of the timing properties of Ce-doped oxyorthosilicate LYSO scintillating crystals. *J. Phys. Chem. Solids,* 2020, vol. 139, 109356
- **G. TAMULAITIS ; A.N. VASIL'EV ; M. KORJIK ; A. MAZZI ; A. GOLA ; S. NARGELAS ; A. VAITKEVIČIUS ; A. FEDOROV ; D. KOZLOV.** Improvement of the time resolution of radiation detectors based on Gd3Al2Ga3O12 scintillators with SiPM readout. *IEEE Trans. Nucl. Sci.,* 2019, vol. 66, 1879-1888
- **BUDINGER T F.** Time-of-flight positron emission tomography: status relative to conventional PET. *J Nucl Med,* 1983, vol. 24, 73-78
- Crystal field theory of transition metal complexes. **KETTLE S.F.A.** Physical Inorganic Chemistry. Springer, 1996
- **A. M. SRIVASTAVA.** aspects of Pr3+ luminescence in solids. *J. Lumin.,* 2016, vol. 169, 445-449
- **M.KORZHIK ; G.TAMULAITIS ; A.VASIL'EV.** Physics of Fast Processes in Scintillators. Springer, 2020